# EUROPÄISCHE PATENTSCHRIFT

(11) **EP 3 869 146 B1**
(45) Veröffentlichungstag und Bekanntmachung des Hinweises auf die Patenterteilung: **19.11.2025**
(21) Anmeldenummer: 21157509.7
(22) Anmeldetag: 17.02.2021
(51) Int. Cl.: F41G 7/22, G01S 13/88

(54) **STEUERUNGSVERFAHREN FÜR EINEN FLUGKÖRPERRADARSENSOR EINES FLUGKÖRPERS, FLUGKÖRPERSTEUEREINHEIT UND FLUGKÖRPER**
CONTROL METHOD FOR A MISSILE RADAR SENSOR OF A MISSILE, MISSILE CONTROL UNIT AND MISSILE
PROCÉDÉ DE COMMANDE POUR UN CAPTEUR RADAR DE MISSILE D'UN MISSILE, UNITÉ DE COMMANDE DE MISSILE ET MISSILE

(30) Priorität: 21.02.2020 DE 102020001155
(43) Veröffentlichungstag der Anmeldung: 25.08.2021
(73) Patentinhaber: Diehl Defence GmbH & Co. KG, 88662 Überlingen (DE)
(72) Erfinder: Burk, Matthias, 90552 Röthenbach (DE); Subatzus, Manuel, 90763 Fürth (DE); Koch, Volker, 90607 Rückersdorf (DE); Hackel, Martin, 88662 Überlingen (DE); Braunbarth, Philipp, 90451 Nürnberg (DE)
(74) Vertreter: Diehl Patentabteilung

(56) Entgegenhaltungen:
- EP-A1- 3 221 921
- EP-A1- 3 428 676
- US-A- 5 629 705

## Beschreibung

Die zu Grunde liegende Erfindung betrifft ein Steuerungsverfahren für zumindest einen, mit einem Flugkörper, insbesondere Lenkflugkörper, längs einer Flugbahn bewegten Flugkörperradarsensor, eine Flugkörpersteuereinheit sowie einen Flugkörper, insbesondere einen Lenkflugkörper.

Im Stand der Technik sind beispielsweise Waffenleitsysteme bekannt, die zum Leiten einer Waffe zu einem Ziel Radarsensoren verwenden. Ein solches Waffenleitsystem ist beispielsweise aus der DE 695 15 790 T2 bekannt, wonach eine Abschussplattform mit einer Radareinrichtung mit synthetischer Apertur ausgestattet ist. Mittels der Radareinrichtung der Abschussplattform kann das ein Ziel umgebende Gebiet kartiert werden, und aus der Kartierung kann der Ort des Ziels bestimmt werden. Basierend auf dem von der Radareinrichtung der Abschussplattform bestimmten Ort des Ziels wird die Waffe zum Ziel geflogen.

Aus der DE 31 45 374 A1 ist ein Verfahren bekannt, mit dem Bodenziele mittels eines Flugkörpers bekämpft werden können. Der Flugkörper weist einen Mittel- und Endphasensuchkopf auf, wobei mit einem Radarsuchkopf in der Mittelphase eine Koordination von Mehrfachzielen erfolgt, und durch Zielauswahl ein Anflugkurs für die Endphase bestimmt wird. Der Radarsuchkopf arbeitet nach dem Prinzip der synthetischen Apertur, wobei in der Mittelphase quer zur Flugrichtung Flächen abgetastet werden, und basierend auf der Dopplerhistorie einzelne Punkte der abgetasteten Fläche aufgelöst werden.

Aus der WO 02/088770 A2 ist ein Verfahren zur Erkennung und Identifizierung von Objekten bei Flugkörpern bekannt. Bei dem Verfahren wird die Umgebung des Flugkörpers mittels eines Radargeräts abgetastet, wobei das Radargerät eine Vielzahl von Antennenelementen umfasst, die entlang der gekrümmten Flugkörperkontur der Flugkörperspitze angebracht sind.

Die EP 3 221 921 A1 beschreibt eine Groundplane-Antenne für einen Flugkörper, deren Groundplane so ausgebildet ist, dass diese als optischer Reflektor dienen kann. Es wird vorgeschlagen, dass am Rand der kreisförmigen Groundplane zwei, einander gegenüberliegende Monopolstrahlerelemente, z.B. in Rechteck- oder Dreieck-Form, angeordnet sind, welche senkrecht zur Groundplane ausgerichtet sind. Die Monopolstrahlerelemente können konform mit einer Oberfläche eines Radoms des Flugkörpers ausgebildet sein, die Groundplane hingegen ist im Inneren des Flugkörpers angeordnet.

Die US 5 629 705 A beschäftigt sich mit einem in einem Flugkörper angeordneten Radarsystem mit einer in der Flugkörperspitze kardanisch gelagerten Monopulsantenne zur Verfolgung von Radarenergie, die von einem Punkt auf dem Ziel reflektiert wird, der sich vom Schwerpunkt der Radarreflexionsenergie eines Ziels unterscheidet. Das Radarsystem umfasst ein Zielwinkel-/Entfernungs-Verfolgungssystem und ein Ziel-Energieüberwachungs-/Entfernungs-Verfolgungssystem. In einer ersten Betriebsart verfolgt das Zielwinkel-/Reichweitenverfolgungssystem den Schwerpunkt der reflektierten Energie des Ziels; und das Zielenergieüberwachungs-/Reichweitenverfolgungssystem überwacht die Stärke der Energie, die von Punkten oder Regionen entlang des Zielkörpers reflektiert wird, die sich von der Region unterscheiden, in welcher der Schwerpunkt der reflektierten Energie liegt. Wenn das Signal-Rausch-Verhältnis (d. h. das S/N-Verhältnis) einer Reflexion an einem der überwachten Punkte entlang des Ziels einen vorbestimmten Wert überschreitet, der die Erfassung eines Sekundärreflektors entlang des Zielkörpers anzeigt, beginnt ein zweiter Betriebsmodus. Während des zweiten Betriebsmodus verfolgt das Zielwinkel-/Reichweitenverfolgungssystem die Energie des Sekundärreflektors und das Zielenergieüberwachungs-/Reichweitenverfolgungssystem überwacht die Energie, die von anderen Punkten entlang des Zielkörpers als dem Sekundärreflektor reflektiert wird.

Die EP 3 428 676 A1 beschreibt eine aktive Zielsuchradarvorrichtung für einen Flugkörper. Die Zielsuchradarvorrichtung enthält eine Antennenvorrichtung, um ein Ziel mit einer Radarwelle zu bestrahlen, einen Empfänger, um eine von dem Ziel reflektierte Welle mittels der Antennenvorrichtung zu empfangen und einen Signalprozessor, um eine kohärente Integrationsverarbeitung an einem Empfangssignal von dem Empfänger durchzuführen, um einen Clutter-Pegel zu beobachten, indem ein Signal verwendet wird, an dem die kohärente Integrationsverarbeitung durchgeführt worden ist, und um ein Sende-Tastverhältnis so zu steuern, dass der beobachtete Clutter-Pegel gleich oder näher zu einem Empfänger-Rauschpegel wird.

Obgleich die bekannten Verfahren eine Zielsteuerung bei einem Flugkörper ermöglichen, ist es dennoch wünschenswert, die Genauigkeit der Zielnavigation und Zielführung sowie die Genauigkeit der Zielerkennung zu verbessern.

Ausgehend davon ist es eine Aufgabe der Erfindung, ein Steuerungsverfahren für zumindest einen, mit einem Flugkörper längs einer Flugbahn bewegten Flugkörperradarsensor, eine Flugkörpersteuereinheit sowie einen Flugkörper, insbesondere einen Lenkflugkörper, bereitzustellen, die eine verbesserte Zielführung und/oder Zielerkennung ermöglichen. Ferner kann es als eine Aufgabe der Erfindung angesehen werden, ein Steuerungsverfahren, eine Flugkörpersteuereinheit und einen Flugkörper bereitzustellen, welche Vorteile hinsichtlich der Funktionalisierung des Flugkörpers bieten.

Diese Aufgabe wird gelöst durch die Merkmale der unabhängigen Ansprüche 1, 9 und 10. Ausgestaltungen der Erfindung ergeben sich aus den abhängigen Ansprüchen sowie aus der nachfolgenden Beschreibung von Ausgestaltungen und beispielhaften Ausführungsformen.

Gemäß der Erfindung ist ein Steuerungsverfahren für zumindest einen, mit einem Flugkörper längs einer Flugbahn bewegten Flugkörperradarsensor vorgesehen. Bei dem mit dem Flugkörper bewegten Flugkörperradarsensor handelt es sich insbesondere um einen flugkörpereigenen Flugkörperradarsensor, der beispielsweise zum Zwecke der Zielerfassung am oder im Flugkörper montiert oder integriert ist oder werden kann. Bei dem Flugkörper kann es sich insbesondere um einen Lenkflugkörper handeln.

Gemäß der Erfindung umfasst der Flugkörper zumindest einen Flugkörperradarsensor, der an einem Umfang des Flugkörperkonus, vorzugsweise im Bereich einer Lenkeinheit des Flugkörpers, montiert oder integriert ist. Beispielsweise können ein oder mehrere Radarantennen an oder in der Umfangsfläche, beispielsweise an oder in einem zur Längsachse im Wesentlichen konzentrischen, zylinderförmigen Flugkörpersegment, montiert bzw. integriert sein.

Die Lenkeinheit kann zwischen der Flugkörpernase bzw. -spitze und einer Antriebseinheit positioniert bzw. gelegen sein. Die Lenkeinheit kann ein oder mehrere Rechner- und/oder Steuereinheiten zur Bewegungs- und Antriebssteuerung, zur Zielerfassung und/oder zur Zielnavigation des Flugkörpers umfassen.

Der Flugkörper kann zusätzlich zum Flugkörperradarsensor ein oder mehrere weitere zur Zielerfassung eingerichtete Sensoren umfassen, die in oder an einer Umfangsfläche oder in oder an der Flugkörperspitze bzw. Flugkörpernase montiert oder integriert sein können.

Der Flugkörperradarsensor ist eingerichtet, ein Zielobjekt auf Basis von Radarsignalen zu erfassen. Dazu kann der Flugkörperradarsensor eine oder mehrere Sendeantennen, Empfangsantennen und/oder Sende-Empfangsantennen umfassen. Zur Erfassung oder Identifizierung eines Zielobjekts können, beispielsweise entsprechend der Radartechnologie, vom Flugkörperradarsensor ausgesandte und nach Reflektion an Umgebungsobjekten, insbesondere dem Zielobjekt, empfangene Radarsignale durch eine geeignet eingerichtete Auswerteeinheit ausgewertet werden. Insbesondere ist der Flugkörperradarsensor dazu eingerichtet, auf Basis von Radarsignalen, d.h. radarbasiert, Umgebungsdaten, insbesondere ein oder mehrere Ziele, zu erfassen, mit dem Ziel, das eine oder die mehreren Zielobjekte zu erfassen und zu detektieren, zu dem/denen der Flugkörper navigiert oder gelenkt werden soll.

Das Steuerungsverfahren sieht gemäß der Erfindung vor, dass die Betriebsparameter zur Modulation des Flugkörperradarsensors während der Bewegung längs der Flugbahn in Abhängigkeit von Zielobjektdaten über das Zielobjekt adaptiv angepasst werden. Entsprechend dem Steuerungsverfahren ist vorgesehen, dass während der Bewegung des Flugkörpers der Flugkörperradarsensor mit unterschiedlichen Modulationen betrieben wird, wobei die unterschiedlichen Modulationen adaptiv in Abhängigkeit der Zielobjektdaten eingestellt oder angepasst werden.

Die Modulation kann beispielsweise eine zeitabhängige Modulation der sende- und/oder empfangsseitigen Betriebsparameter betreffen. Beispielsweise kann das Sendesignal eine zeitabhängige Modulation, z.B. der Frequenz, umfassen, wobei der zeitabhängigen Modulation entsprechende Betriebsparameter zum Betrieb des Flugkörperradarsensors gemäß der zeitabhängigen Modulation zugeordnet sein können.

Der Betrieb des Flugkörperradarsensors auf Grundlage der jeweiligen Betriebsparameter führt dann zu einem Sendesignal mit entsprechender Modulation. Entsprechendes gilt für Betriebsparameter betreffend die Empfangssignale.

Gemäß des erfindungsgemäßen Steuerungsverfahrens werden die Betriebsparameter zur Modulation des Flugkörperradarsensors adaptiv angepasst, so dass entsprechend die Modulation des Flugkörperradarsensors adaptiv, in Abhängigkeit der geänderten Umgebungsdaten zum Zielobjekt verändert werden kann. Mithin bezeichnen die anspruchsgemäß bezeichneten Betriebsparameter zur Modulation solche Betriebsparameter, die zu einem Betrieb des Flugkörperradarsensors mit einer durch die Betriebsparameter definierten bzw. gegebenen Modulation führen. Ändern sich diese Betriebsparameter durch die adaptive Anpassung, wird der Flugkörperradarsensor entsprechend mit einer geänderten, adaptiv angepassten Modulation betrieben.

Unter der Formulierung "adaptiv anpassen" soll insbesondere verstanden werden, dass die Betriebsparameter situationsbezogen angepasst bzw. verändert werden, wobei die situationsbezogene Anpassung zumindest basierend auf Informationen zum Zielobjekt, d.h. entsprechend der Erfindung basierend auf den Zielobjektdaten, erfolgt. Anders ausgedrückt soll unter der Formulierung "adaptiv anpassen" insbesondere verstanden werden, dass die Modulation in Reaktion auf sich verändernde Zielobjektdaten angepasst wird. Insbesondere kann die Modulation des Flugkörperradarsensors bei sich ändernden Zielobjektdaten angepasst werden. Eine Änderung der Zielobjektdaten kann beispielsweise die Position, die Geschwindigkeit, die Entfernung und/oder die Bewegungsrichtung des Zielobjekts, insbesondere relativ zum Flugkörper, betreffen. Werden Änderungen in den Zielobjektdaten festgestellt, beispielsweise durch eine flugkörpereigene Auswerteeinheit und/oder eine externe Auswerteeinheit, können die Betriebsparameter in Reaktion auf die festgestellten Änderungen angepasst, d.h. adaptiv angepasst, werden. Durch die adaptive Anpassung der Betriebsparameter kann die Modulation des Flugkörperradarsensors in geeigneter Weise angepasst werden, wodurch beispielsweise die Erfassung des Zielobjekts bzw. der Zielobjekte und insbesondere der Vorgang der Zielobjekterfassung durch den Flugkörperradarsensor mit der aktuellen Bewegungssituation synchronisiert werden können.

Die adaptive Anpassung der Betriebsparameter und eine damit einhergehende adaptive Anpassung der Modulation kann beispielsweise synchron, insbesondere im Wesentlichen in Echtzeit, zu sich ändernden Gegebenheiten betreffend insbesondere das Zielobjekt erfolgen.

Gemäß Ausgestaltungen kann die Anpassung der Betriebsparameter ferner basierend auf Informationen oder Daten betreffend den Flugkörper und/oder den Flugkörperradarsensor adaptiv dahingehend erfolgen, dass die Modulation adaptiv in Abhängigkeit sich ändernder Gegebenheiten seitens des Flugkörpers und/oder des Flugkörperradarsensors angepasst wird. Flugkörperseitig und seitens des Flugkörperradarsensors kommen hierbei beispielsweise die Position, die Geschwindigkeit, die Flugrichtung und die Ausrichtung des Flugkörpers oder Flugkörperradarsensors in Betracht.

Die adaptive Anpassung der Betriebsparameter kann insbesondere basierend auf einer oder mehreren, insbesondere vorgegebenen, Randbedingungen erfolgen, wobei als Randbedingung beispielsweise die Detektionsleistung, das Signal-zu-Rauschverhältnis, der Zielkontrast und/oder andere Randbedingungen verwendet werden können. Beispielsweise kann die adaptive Anpassung der Betriebsparameter derart erfolgen, dass bei gegebenen Umgebungsbedingungen, betreffend beispielsweise den Abstand zum Zielobjekt, die Geschwindigkeit usw., die Betriebsparameter hinsichtlich der jeweiligen Randbedingung optimiert werden. Die Optimierung kann beispielsweise dahingehend eingerichtet sein, um die Erfassung, die Erkennung und die Verfolgung des Zielobjekts im Detektionsfenster bzw. Erfassungsfenster des Flugkörperradarsensors zu ermöglichen und zu verbessern. Die Optimierung kann beispielswiese Algorithmen umfassen, nach denen das oder die Entfernungstore (engl. "range gate") der Radardetektion hinsichtlich des jeweils gewünschten Zielkontrasts und/oder bezüglich einer jeweils geeigneten Beobachtungsdauer angepasst werden, so dass, jeweils adaptiv, ein optimaler Zielkontrast erreicht werden kann.

Durch die adaptive Anpassung der Betriebsparameter zur Modulation ist es insbesondere möglich, wie bereits erwähnt, die Detektionscharakteristik, insbesondere umfassend Senden und/oder Empfangen, des Flugkörperradarsensors so einzustellen, dass das Zielobjekt zuverlässig erkannt und verfolgt werden kann. Ferner kann durch eine adaptive Anpassung die Störfestigkeit des Flugkörperradarsensors verbessert werden.

Entsprechend der Erfindung ist vorgesehen, dass die genannten Betriebsparameter Sendebetriebsparameter einer Sendeeinheit des Flugkörperradarsensors zum Senden von Radarsignalen und Empfangsbetriebsparameter einer Empfangseinheit des Flugkörperradarsensors zur Erfassung der vom Zielobjekt, reflektierten Radarsignale umfassen.

Die Sendebetriebsparameter und Empfangsbetriebsparameter werden entsprechend der Erfindung dabei adaptiv in Abhängigkeit der Zielobjektdaten über das Zielobjekt und der Flugkörperdaten angepasst. Bei den Empfangsbetriebsparametern kann es sich beispielsweise um Abtastparameter zur Signalabtastung reflektierter Radarsignale, beispielsweise zur Einstellung des Abtastfensters und/oder der Integrationsfrequenz, handeln. Eine Anpassung oder Nachführung der Betriebsparameter kann beispielsweise derart erfolgen, dass Zielobjekte im jeweiligen Abtastintervall, insbesondere Entfernungstor, in optimaler Weise erfasst werden können. Einhergehend damit kann insbesondere eine Unterdrückung von Signalen, insbesondere Stör- oder Fremdsignalen, außerhalb eines dem Zielobjekt zugeordneten Abtastintervalls erfolgen, wobei die Unterdrückung der Stör- oder Fremdsignale beispielsweise durch geeignete Anpassung der Betriebsparameter betreffend die Abtastparameter des Flugkörperradarsensors erreicht werden kann.

Entsprechend der Erfindung umfassen die Zielobjektdaten Daten zur Position des Zielobjekts, zur Größe des Zielobjekts, zur Beschaffenheit des Zielobjekts, zur Annäherungsgeschwindigkeit des Zielobjekts, zur Geschwindigkeit des Zielobjekts, zur Entfernung des Zielobjekts vom Flugkörper, zur Beschleunigung und/oder zur Orientierung des Zielobjekts, beispielsweise zur Bewegungsrichtung des Zielobjekts.

Die Zielobjektdaten können die genannten Daten jeweils absolut oder, sofern möglich, relativ zu korrespondierenden Flugkörperdaten relativ angeben bzw. beschreiben. Beispielsweise kann die Geschwindigkeit des Zielobjekts als Absolutgeschwindigkeit oder als Relativgeschwindigkeit bezüglich der Flugkörpergeschwindigkeit berücksichtigt werden.

Die Betriebsparameter können insbesondere in Abhängigkeit der genannten Daten zum Zielobjekt und/oder zum Flugkörper adaptiv angepasst werden. Zur adaptiven Anpassung können eine oder mehrere der genannten Datenkategorien, wie beispielsweise die (relative) Geschwindigkeit, die (relative) Beschleunigung, Beschaffenheit usw. verwendet werden. Die Auswahl und Verwendung jeweiliger Datenkategorien kann dabei situationsbezogen, z.B. je nach Flugphase, erfolgen. Dabei kann/können die jeweils zur Anpassung der Betriebsparameter zur Modulation verwendeten Datenkategorie/n variieren. Beispielsweise können zeitlich aufeinanderfolgende Anpassungen der Betriebsparameter jeweils unter Berücksichtigung unterschiedlicher Datenkategorien, z.B. bei jeweiliger Verwendung lediglich einer Datenkategorie, oder unter Berücksichtigung jeweils unterschiedlicher, insbesondere sich z.B. überschneidender, Gruppen von Datenkategorien, wenn beispielsweise mehrere Datenkategorien verwendet werden, erfolgen.

Möglich ist auch, dass die zum Zielobjekt und/oder Flugkörper verfügbaren Daten unterschiedlich gewichtet werden, wobei die Gewichtung wiederum in Abhängigkeit der durch das Zielobjekt und den Flugkörper gegebenen Gesamtsituation adaptiv erfolgen kann. Wichtungsfaktoren bei der Gewichtung können beispielsweise die, z.B. geschätzte oder berechnete, Genauigkeit der Zielobjektdaten berücksichtigen. Kann beispielsweise die Beschleunigung des Zielobjekts lediglich mit einem vergleichsweise großen Fehler ermittelt werden, so kann die jeweilige Datenkategorie mit einem kleinen Wichtungsfaktor, z.B. Null oder einem vergleichsweise kleinen Wert nahe Null, gewichtet werden. Umgekehrt können relativ genaue und sichere Daten mit einem höheren Wichtungsfaktor, z.B. Eins oder nahe Eins, gewichtet werden. Für die jeweilige Anpassung der Modulation nicht relevante Datenkategorien, insbesondere solche, die nicht herangezogen werden sollen, können insoweit mit einem Wichtungsfaktor von Null gewichtet werden.

Die Verwendung der genannten Datenkategorien ermöglicht es, situationsbezogene Anpassungen der Modulation vorzunehmen, wobei insbesondere die kinematische Bewegungs- und/oder Begegnungssituation berücksichtigt werden kann.

Zur Beschreibung der Daten kann eine zur Durchführung des Steuerungsverfahrens eingerichtete Steuereinheit, z.B. eine flugkörpereigene Steuereinheit, gemäß Ausgestaltungen ein flugkörper-systemeigenes Koordinatensystem verwenden. Insbesondere kann ein flugkörper-systemeigenes Kugelkoordinatensystem, mit den üblichen Koordinaten Radius r, Azimutwinkel Phi, und Polarwinkel Theta, verwendet werden, mit einer Polachse, die parallel zur Flugkörperachse verläuft. Vorzugsweise ist die positive Polachsenrichtung, d.h. der in positive Richtung zeigende Polachsenvektor, parallel zu dem Vektor, der vom antriebsseitigen Ende des Flugkörpers zur Flugkörperspitze zeigt.

Entsprechend der Erfindung werden die Betriebsparameter des Weiteren in Abhängigkeit von Flugkörperdaten adaptiv angepasst werden. Hierbei sind die Flugkörperdaten ausgewählt aus der Gruppe: Position des Flugkörpers, Geschwindigkeit des Flugkörpers, Beschleunigung des Flugkörpers, Annäherungsgeschwindigkeit des Flugkörpers auf das Zielobjekt, Flugrichtung des Flugkörpers, Art des Flugkörperradarsensors, Position des Flugkörperradarsensors relativ zum Flugkörperkorpus, Energievorrat des Flugkörpers zum Betrieb des Flugkörperradarsensors, Flugphase des Flugkörpers. Wie bereits im Zusammenhang mit den Zielobjektdaten beschrieben, können jeweilige Daten, sofern möglich, auch relativ zu entsprechenden Zielobjektdaten gegeben sein bzw. ermittelt werden. Die Flugkörperdaten können, analog zu den Zielobjektdaten, in jeweils geeigneter Weise, beispielsweise in Abhängigkeit der Gesamtsituation, ausgewählt und kombiniert oder gewichtet werden. Hierbei ist es insbesondere auch möglich, dass ein oder mehrere Daten basierend auf Wichtungsfaktoren berücksichtigt werden. Die Auswahl und Wichtung kann beispielsweise in Abhängigkeit der jeweils vorliegenden Flugphase, beispielsweise einer Annäherungsphase an das Zielobjekt, oder einer Abfangphase, des Flugkörpers erfolgen. Mit den Flugkörperdaten, die entsprechend der Erfindung zusätzlich zu den Zielobjektdaten verwendet werden können, wird die Zielerfassung und -verfolgung noch besser an die jeweils bestehende kinematische Gesamt-Bewegungssituation und -Begegnungssituation angepasst.

Die adaptive Anpassung der Betriebsparameter zur Modulation des Flugkörperradarsensors erfolgt gemäß Ausgestaltungen zumindest in Abschnitten längs der Flugphase oder im Wesentlichen während des gesamten Flugs des Flugkörpers, vorzugsweise fortlaufend, insbesondere iterativ.

Bei iterativer Durchführung der Anpassung der Betriebsparameter zur Modulation kann beispielsweise überprüft werden, ob sich die jeweils zu berücksichtigenden Daten über das Zielobjekt und/oder den Flugkörper geändert haben. Bei Vorliegen einer Änderung der Daten, die z.B. über einen vorgegebenen Schwellwert hinausgeht, können die Betriebsparameter zur Modulation des Flugkörperradarsensors entsprechend angepasst und optimiert werden. Mithin kann insbesondere bei relevanten Änderungen der jeweils berücksichtigten Daten die Modulation des Flugkörperradarsensors angepasst werden.

Ein entsprechendes Steuerungsverfahren ermöglicht damit eine iterativ adaptive Anpassung der Betriebsparameter zur Modulation unter Berücksichtigung der aktuellen Bewegungssituation und der voraussichtlichen Begegnungssituation. Basierend auf einer, zumindest abschnittsweise längs der Flugbahn erfolgenden oder im Wesentlichen während der gesamten Flugphase des Flugkörpers erfolgenden, iterativ adaptiven Anpassung der Betriebsparameter zur Modulation können die Zuverlässigkeit der Zielerfassung und, basierend darauf, die Zielführung des Flugkörpers weiter verbessert werden. Insbesondere ist eine im Wesentlichen in Echtzeit erfolgende Anpassung der Modulation an die jeweils vorliegende Bewegungs- und Begegnungssituation möglich.

Gemäß Ausgestaltungen handelt es sich bei dem zumindest einen Flugkörperradarsensor um einen Dauerstrichradarsensor, insbesondere einen frequenzmodulierten Dauerstrichradarsensor, oder einen Impulsradarsensor. Frequenzmodulierte Dauerstrichradarsensoren sind auch als sog. FMCW Radarsensoren bekannt (engl. frequency modulated continuous wave).

Gemäß der Erfindung ist die Mittenachse, d.h. die Zentral- oder Hauptachse, des Detektionsfelds des Flugkörperradarsensors schräg zur Längsachse des Flugkörpers ausgerichtet. Vorzugsweise schließt die vom Flugkörper wegweisende Richtung der Mittenachse des Detektionsfelds mit der vom antriebsseitigen Ende des Flugkörpers zur Flugkörperspitze zeigenden Richtung einen Zwischenwinkel ein der kleiner als 90 Grad ist, mithin also einen spitzen Zwischenwinkel. Bei dieser Ausgestaltung ist das Detektionsfeld nicht konzentrisch zur Flugkörperachse, sondern bezüglich der Flugkörperachse seitlich ausgerichtet. Vorzugsweise ist der Flugkörperradarsensor derart eingerichtet, beispielsweise durch geeignete Ausrichtung der Mittenachse des Detektionsfelds, dass das Detektionsfeld einen Abschnitt des bezüglich der Flugkörperspitze vorderen Halbraums des Flugkörpers erfassen kann.

Basierend auf den Flugkörperdaten und/oder den Zielobjektdaten kann nach Ausgestaltungen des Weiteren der Rollwinkel, der Gierwinkel und/oder der Nickwinkel des Flugkörpers gesteuert werden. Insbesondere können die Zielobjektdaten und/oder Flugkörperdaten durch eine entsprechende Steuereinheit zur Flugkörpersteuerung ausgewertet werden. Die Steuereinheit kann Bestandteil der Lenkeinheit des Flugkörpers sein. Basierend auf den ausgewerteten Daten kann die Zielführung bzw. Zielnavigation des Flugkörpers gesteuert, insbesondere angepasst, werden derart, dass ein Begegnungsort zwischen Zielobjekt und Flugkörper zumindest mit ausreichender Wahrscheinlichkeit erreicht werden kann. Zur Zielführung bzw. Zielnavigation können neben den Richtungsdaten im flugkörpereigenen Koordinatensystem auch korrespondierende globale Daten zum Flugkörper bzw. Zielobjekt, z.B. Daten eines globalen Navigationssatellitensystems, kurz GNSS, und/oder Daten einer Inertialnavigation des Flugkörpers verwendet werden.

Insgesamt ist es mithin möglich, die Zielobjektdaten und/oder Flugkörperdaten in zweifacher Hinsicht zu nutzen: einerseits zur Einstellung der Betriebsdaten zur Modulation des Flugkörperradarsensors, und andererseits zur Einstellung der Betriebsdaten zur Zielführung bzw. Zielnavigation des Flugkörpers.

Gemäß Ausgestaltungen kann im Rahmen der adaptiven Anpassung zumindest einer der folgenden Betriebsparameter des Flugkörperradarsensors adaptiv angepasst werden: Pulsrate, Intensität, Frequenz, Rampensteigung, Rampenlänge, Rampenhöhe, insbesondere Pegel, Wellenform. Die sich daraus jeweils ergebenden Modulationen des Flugkörperradarsensors können insbesondere hinsichtlich eines optimalen Signal-zu-Rauschverhältnisses (SNR), hinsichtlich einer im Wesentlichen gleichbleibenden Detektionszone und/oder hinsichtlich einer die Radarsignatur des Zielobjekts für einen jeweils vorliegenden Aspektwinkel beschreibenden Messgröße optimiert, werden.

Gemäß Ausgestaltungen können die Flugkörperdaten und/oder die Zielobjektdaten basierend auf vom Flugkörper empfangenen Sensordaten zumindest einer externen Sensoreinheit, basierend auf Daten des Flugkörperradarsensors und/oder basierend auf Sensordaten zumindest einer vom Flugkörperradarsensor verschiedenen, weiteren flugkörpereigenen Sensoreinheit zur Erfassung von Zielobjektdaten, insbesondere in Echtzeit, ermittelt und/oder aktualisiert werden. Beispielsweise können Zielobjektdaten basierend auf einem in der Flugkörperspitze oder -nase vorhandenen Sensor, beispielsweise einem optischen Sensor, einem Infrarot-Sensor oder einem Radarsensor ermittelt und zur Ermittlung und/oder Aktualisierung der Zielobjektdaten verwendet werden. Der Sensor in der Flugkörperspitze kann beispielsweise derart integriert oder montiert sein, dass dieser ein zur Flugkörperachse konzentrisches Detektionsfeld aufweist.

Gemäß Ausgestaltungen ist es möglich, Flugkörperdaten und/oder Zielobjektdaten zu verwenden, die mittels einer geeignet eingerichteten Empfangseinheit des Flugkörpers von einer externen Kommunikationseinheit, beispielsweise über eine unidirektionale oder bidirektionale Datenverbindung, empfangen werden/wurden. Bei der externen Kommunikationseinheit kann es sich beispielsweise um eine boden-, wasser- oder luftgestützte Abschusseinheit für den Flugkörper oder um eine dem Flugkörper zugeordnete boden-, wasser- oder luftgestützte Waffensystemeinheit handeln. Die von der externen Kommunikationseinheit übermittelten und empfangenen Daten können beispielsweise auf Sensordaten einer der externen Kommunikationseinheit zugeordneten Sensoreinheit beruhen, bei der es sich z.B. um eine Radarsensoreinheit handeln kann. Der Empfang der Daten von der externen Kommunikationseinheit kann vor Abschuss oder Start des Flugkörpers und/oder während des Flugs des Flugkörpers.

Gemäß Ausgestaltungen können die Sensordaten der externen Sensoreinheit zumindest teilweise über eine Drahtlosverbindung, z.B. eine sog. Uplink-Verbindung, während des Flugs des Flugkörpers empfangen werden. Vor Start des Flugkörpers können die Sensordaten der externen Sensoreinheit über eine drahtgebundene Datenverbindung vom Flugkörper, d.h. einer entsprechenden Empfangseinheit des Flugkörpers, oder über eine Drahtlosverbindung empfangen werden.

Die Daten der externen Sensoreinheit können insbesondere auf einer flugkörperseitigen Speichereinheit gespeichert werden und bei Bedarf zur adaptiven Anpassung der Betriebsdaten zur Modulation des Flugkörperradarsensors herangezogen werden. Mithin kann Vorwissen zum Zielobjekt in einfacher Weise dem Flugkörper zur Anpassung der Betriebsparameter zur Modulation des Flugkörperradarsensors zur Verfügung gestellt werden. Darüber hinaus können Daten zum Zielobjekt und/oder Flugkörper auch während des Flugs im Wesentlichen in Echtzeit bereitgestellt werden.

Neben den externen Daten oder zusätzlich dazu können zur adaptiven Anpassung der Betriebsdaten zur Modulation auch Daten verwendet werden, die auf Grundlage einer flugkörpereigenen Inertialsensorik zur Flugkörpernavigation basierend auf einer Inertialnavigation, ermittelt werden. Ferner können, wie bereits erwähnt, Daten eines globalen Navigationssystems, insbesondere eines globalen Navigationssatellitensystems (GNSS), herangezogen werden. Basierend auf derartigen zusätzlichen Daten ist es insbesondere möglich, die Betriebsparameter zur Modulation in geeigneter Weise und zugeschnitten auf die jeweilige Situation unter Einbeziehung von Position und kinematischer Gesamtsituation einzustellen, mit dem Ziel einer weiter verbesserten Detektionsgenauigkeit und -zuverlässigkeit der Zielerfassung basierend auf den mit dem Flugkörperradarsensor erfassten Daten.

Gemäß Ausgestaltungen kann die adaptive Anpassung der Betriebsparameter zur Modulation des Flugkörperradarsensors des Weiteren in Abhängigkeit des jeweils vorliegenden Signal-zu-Rauschverhältnisses (SNR), in Abhängigkeit einer jeweils geforderten Detektionsleistung, insbesondere hinsichtlich Entdeckungswahrscheinlichkeit und Falschalarmrate, in Abhängigkeit des Antennengewinns und/oder in Abhängigkeit der Sendeleistung in Richtung des Zielobjekts, insbesondere in Abhängigkeit der Reichweite des Flugkörperradarsensors, erfolgen. Wie weiter oben bereits angedeutet, kann die adaptive Anpassung der Betriebsparameter zur Modulation des Flugkörperradarsensors derart erfolgen, dass eine oder mehrere der genannten Größen, d.h. SNR, Detektionsleistung usw., situationsbezogen jeweils optimiert sind oder werden. Beispielsweise kann durch eine geeignete Rampenkonfiguration bei einem FMCW Radarsensor ein jeweils optimiertes SNR erreicht werden, und einhergehend damit eine bestimmte Detektionsleistung.

Gemäß Ausgestaltungen kann bei dem Steuerungsverfahren in einer initialen Flugphase ein zeitkontinuierliches Signal, insbesondere ein frequenzmoduliertes zeitkontinuierliches Signal, einer bestimmten Periodendauer, die allgemein auch bekannt ist als Chirp-Dauer, eingestellt und abgestrahlt werden. In dieser Flugphase erfolgt noch keine adaptive Anpassung der Modulation des Flugkörperradarsensors. In einer darauffolgenden Flugphase nach Erkennung des Zielobjekts im Auswertefenster des Flugkörperradarsensors, basierend beispielsweise auf einem detektierten Zielecho, und/oder im Auswertefenster der weiteren flugkörpereigenen Sensoreinheit können die Betriebsparameter zur Modulation des Flugkörperradarsensors adaptiv angepasst werden, insbesondere, wie oben beschrieben, unter Berücksichtigung von Zielobjektdaten und/oder Flugkörperdaten. Mithin beginnt bei solchen Ausgestaltungen eine adaptive Anpassung der Betriebsparameter zur Modulation des Flugkörperradarsensors in dem Zeitpunkt oder Abschnitt der Flugphase, in dem der Flugkörperradarsensor und/oder die weitere Sensoreinheit in der Lage ist/sind, das Zielobjekt zu erfassen.

In der initialen Flugphase können die Betriebsparameter des Flugkörperradarsensors beispielsweise basierend auf geschätzte Daten zur Reichweite und/oder zur Annäherungsgeschwindigkeit zum Zielobjekt eingestellt werden, insbesondere basierend auf a priori Wissen zum Zielobjekt und/oder Flugkörper, wobei der Flugkörperradarsensor in dieser initialen Flugphase ohne Änderung der Modulation, d.h. mit gleichbleibender Modulation, betrieben werden kann.

Gemäß Ausgestaltungen können in einer finalen Flugphase, beispielsweise in einer finalen Abfangphase bei Anwendung bei einem Lenkflugkörper, die Betriebsparameter zur Modulation des Flugkörperradarsensors statistisch angepasst werden. Dabei folgt die finale Flugphase auf eine intermediäre Flugphase, in welcher die Betriebsparameter zur Modulation, wie in Ausgestaltungen hierin vorgeschlagen, adaptiv in Abhängigkeit der Zielobjektdaten und/oder Flugkörperdaten angepasst werden. Die intermediäre Flugphase kann unmittelbar auf die initiale Flugphase folgen, wobei ein Übergang zwischen den initialen und intermediären Flugphasen zu dem Zeitpunkt oder in dem Bereich des Flugs des Flugkörpers erfolgen kann, in dem das Zielobjekt mit dem oder den flugkörpereigenen Sensoren erfasst wird oder werden kann. Der Übergang von intermediärer Flugphase zur finalen Flugphase kann beispielsweise bei Unterschreiten eines, z.B. vorgegebenen, Abstands erfolgen. Ferner ist es möglich, von der intermediären Flugphase zur finalen Flugphase überzugehen, sobald ein ausreichender Zielkontrast über feste Zielverweilzeiten erreicht ist oder sichergestellt werden kann. Bei einer derartigen Betriebsweise des Flugkörperradarsensors können in der intermediären Flugphase basierend auf ermittelten Daten zum Zielobjekt und zum Flugkörper beispielsweise die Genauigkeit und Zuverlässigkeit der Zielerkennung und damit der Zielführung verbessert werden. Sobald statistische Methoden zur Einstellung der Modulation ausreichen, können diese in der finalen Flugphase eingesetzt werden, wodurch beispielsweise die Systemleistung zur Ermittlung oder Berechnung der jeweiligen Betriebsparameter reduziert werden kann.

Entsprechend der Erfindung ist eine Flugkörpersteuereinheit mit den Merkmalen von Anspruch 9 vorgesehen. Die Flugkörpersteuereinheit umfasst eine festprogrammierte Steuereinheit und/oder eine flüchtig programmierbare Steuereinheit mit einem zugeordneten nichtflüchtigen Speicher, wobei die festprogrammierte Steuereinheit und/oder der nichtflüchtige Speicher Instruktionen umfassen, deren Ausführung durch die festprogrammierte Steuereinheit bzw. die flüchtig programmierbare Steuereinheit ein Steuerungsverfahren umfassend Verfahrensschritte eines Steuerungsverfahrens nach einem der Ansprüche 1 bis 8 bewirken.

Entsprechend der Erfindung ist ein Flugkörper gemäß den Merkmalen von Anspruch 10, insbesondere Lenkflugkörper vorgesehen, der eine derartige Flugkörpersteuereinheit gemäß Anspruch 9 umfasst. Die Flugkörpersteuereinheit kann, zumindest teilweise, beispielsweise in Verbindung mit einer Flugkörpersteuerung einer Lenkeinheit zur Flugsteuerung und Navigation des Flugkörpers und/oder zumindest teilweise als separate Steuereinheit in Verbindung mit dem Flugkörperradarsensor implementiert sein.

Der Flugkörper umfasst weiterhin zumindest einen flugkörpereigenen Flugkörperradarsensor, wobei die Flugkörpersteuereinheit mit dem flugkörpereigenen Flugkörperradarsensor zu dessen Ansteuerung gemäß einem Steuerungsverfahren nach einem der Ansprüche 1 bis 8 signaltechnisch und steuerungstechnisch gekoppelt ist.

Erfindungsgemäß weist der flugkörpereigene Flugkörperradarsensor ein Detektionsfeld aufweisen, dessen Mittenachse schräg zur Längsachse des Flugkörpers zum vorderen Halbraum des Flugkörpers hin, ausgerichtet ist. Der flugkörpereigene Flugkörperradarsensor ist an einem Umfang des Flugkörperkorpus integriert oder montiert.

Gemäß Ausgestaltungen kann der Flugkörper des Weiteren eine oder mehrere vom Flugkörperradarsensor verschiedene, flugkörpereigene weitere Sensoreinheiten zur Erfassung von Zielobjektdaten umfassen. Die weitere/n Sensoreinheit/en kann/können mit der Flugkörpersteuereinheit zur Durchführung eines Steuerungsverfahrens nach einem der hierin beschriebenen Ausgestaltungen signaltechnisch und steuerungstechnisch gekoppelt sein. Bei der weiteren Sensoreinheit kann es sich beispielsweise um eine Radarsensoreinheit, eine optische Sensoreinheit oder um eine Infrarot-Sensoreinheit handeln. Die weitere Sensoreinheit kann beispielsweise an einer Flugkörpernase integriert oder montiert sein und beispielswiese ein zur Flugkörperachse konzentrisches Detektionsfeld aufweisen. Bei erfindungsgemäß mit schräg zur Längsachse des Flugkörpers, z.B. am Außenumfang des Flugkörperkorpus, integriertem Flugkörperradarsensor ist es insbesondere möglich, an Flugkörperspitze weitere, von der Zielobjekterfassung verschiedene Funktionalisierungen zu integrieren. Wie jedoch im Zusammenhang mit Ausgestaltungen beschrieben wurde, kann das hierin vorgeschlagenen Steuerungsverfahren auch für zielsuchende Sensoreinheiten verwendet werden, die in der Flugkörperspitze montiert oder integriert sind. Werden zwei oder mehr zielsuchende Sensoreinheiten verwendet, etwa in der Flugkörperspitze und/oder am Umfang des Flugkörpers, können die Zielerkennung und die Zielnavigation maßgeblich verbessert werden.

Wie bereits beschrieben wurde, ist der Flugkörperradarsensor erfindungsgemäß so eingerichtet, dass dessen Detektionsfeld eine zur Längsachse des Flugkörpers schräge Mittenachse, d.h. Zentral- oder Hauptachse, aufweist. Ein entsprechender Flugkörperradarsensor kann insbesondere als Seitensichtsensor bezeichnet werden. Ein solcher Seitensichtsensor kann mithin eine Sensoreinheit aufweisen, deren ein oder mehrere Sensoren jeweils ein Detektionsfeld aufweisen, dessen Mittenachse im Koordinatensystem des Flugkörpers einen von Null verschiedenen, insbesondere spitzen, Polarwinkel aufweist/en.

Der Polarwinkel ist dabei insbesondere bezüglich der durch die Längsachse des Flugkörpers definierten Polachse im Sinne von Kugelkoordinaten, genauer bezüglich einer parallel zur Längsachsenrichtung verlaufenden Polachse und der Mittenachse des Sensorfelds zu verstehen. Dabei ist der Polarwinkel als derjenige Winkel zu verstehen, der gemessen ist zwischen dem von antriebsseitigem Ende zu kopfseitigem Ende längs der Polachse weisenden Polachsenvektor und dem längs der jeweiligen Mittenachse verlaufenden und in Richtung des Detektionsfelds vom Flugkörper wegweisenden Mittenachsenvektor.

Ein entsprechender Seitensichtsensor weist mithin ein bezüglich der Flugkörperachse nicht konzentrisches Detektionsfeld auf. Die Richtung der positiven Polachse, d.h. der Polachsenvektor, kann bezüglich eines rechtshändigen Bezugssystems des Flugkörpers in Kugelkoordinaten verstanden werden, wobei die Richtung der positiven Polachse durch die von antriebsseitigem Ende zu kopfseitigem Ende verlaufende Richtung definiert ist. Entsprechend dieses Kugelkoordinatensystems ist der Polarwinkel in dem vorgenannten Sinne zu verstehen, und ein zugehöriger Azimutwinkel ist als ein rechtshändig in Umfangsrichtung zum Polachsenvektor gemessener Winkel zu verstehen.

Die obigen Ausführungen bezüglich der Ausrichtung des Detektionsfelds im Hinblick auf Kugelkoordinaten sollen entsprechend für andere, von Kugelkoordinatensystemen verschiedene Koordinatensysteme gelten, insbesondere für Koordinatensysteme, die nicht ortsfest mit dem Flugkörper assoziiert sind.

Der Begriff Detektionsfeld soll dabei allgemein verstanden werden, und nicht auf Radarsensoren beschränkt sein, sondern entsprechend auch für Infrarot-Sensoren, optische Sensoren, oder andere Sensoren gelten, die dazu geeignet sind, bei Implementierung ein Zielobjekt zu detektieren.

Damit eine Flugkörpersteuereinheit eingerichtet ist zur Durchführung und Ausführung der jeweiligen, hierin beschriebenen Funktionen, kann diese entsprechend programmiert sein. Die Programmierung kann dabei als Festprogrammierung auf einem entsprechenden Steuerbaustein vorliegen und/oder in Form von Instruktionen gegeben sein, die auf einem nichtflüchtigen Speicher gespeichert sind und die bei Ausführung durch eine Rechnereinheit, insbesondere einen Prozessor, der Steuereinheit eine Ausführung der jeweiligen hierin beschriebenen Funktionen bewirken.

Basierend auf den Zielobjektdaten und Flugkörperdaten kann der Flugkörper beispielsweise entsprechend einer prädiktiven Lenkungssteuerung manövriert werden, bei der beispielsweise, aber nicht ausschließlich, eine sog. Trajectory Shaping Guidance bekannt beispielsweise aus: Paul Zarchan, 2007, Tactical and Strategic Missile Guidance, 5th Edition, ISBN-10: 1-56347-874-9, Kapitel 25, verwendet werden kann.

Gemäß Ausgestaltungen können der Flugkörperradarsensor und insbesondere eine korrespondierende Flugkörpersteuereinheit derart eingerichtet sein, dass die Richtcharakteristik des Flugkörperradarsensors basierend zumindest auf Zielobjektdaten und/ oder Flugkörperdaten derart veränderbar, insbesondere einstellbar, sind, dass das Zielobjekt zumindest abschnittsweise längs der Flugbahn innerhalb des Detektionsfelds des Flugkörperradarsensors gelegen und insbesondere mit ausreichendem Signal-zu-Rauschverhältnis detektierbar ist. Mit einer entsprechend eingerichteten Flugkörpersteuereinheit bzw. mit entsprechend eingerichteten Steuereinheiten kann insbesondere die Robustheit der Zielerfassung und Zielführung verbessert werden.

Gemäß Ausgestaltungen kann die Flugkörpersteuereinheit dazu eingerichtet sein, ein im Detektionsfeld des Flugkörperradarsensors und/oder der weiteren Sensoreinheit gelegenes Zielobjekt, insbesondere das Zielobjekt als solches, dessen Position, Orientierung und/oder Geschwindigkeit, basierend auf Sensordaten der jeweils erfassenden Sensoreinheit zu detektieren bzw. ermitteln. Ferner kann die Flugkörpersteuereinheit oder eine zugeordnete Steuereinheit dazu eingerichtet sein, zumindest teilweise basierend auf Sensordaten, ggf. unter Einbeziehung von weiteren Zielobjektdaten und/oder Flugkörperdaten, eine Flugbahn zum adaptiv aktiven, prädiktiven Lenken des Flugkörpers zum Zielobjekt zu ermitteln. Basierend auf der Flugbahn kann der Flugkörper durch die Flugkörpersteuerung zum voraussichtlichen Begegnungsort mit dem Zielobjekt gelenkt, d.h. navigiert, werden. Datenverarbeitungsschritte zur Ermittlung, insbesondere Berechnung, von Zielobjektdaten, Flugkörperdaten und/oder Daten zur Flugsteuerung des Flugkörpers können, zumindest teilweise, auch durch externe Datenverarbeitungseinheiten ausgeführt werden, wobei entsprechende Daten dann über geeignet eingerichtete Datenverbindungen drahtlos oder drahtgebunden zum Flugkörper übermittelt und von diesem empfangen werden können.

Unter dem Begriff "adaptiv" soll im Zusammenhang mit dem Lenken des Flugkörpers sowie im Zusammenhang mit der Anpassung der Betriebsparameter zur Modulation insbesondere verstanden werden, dass das Lenken bzw. die Anpassung der Betriebsparameter in Reaktion auf sich ändernde Umgebungssituationen und -bedingungen, beispielsweise sich ändernde Bewegungssituationen, erfolgt.

Der Begriff "prädiktiv" soll im Zusammenhang mit dem Lenken des Flugkörpers insbesondere dahingehend verstanden werden, dass das Lenken und die damit einhergehende Bewegungssteuerung des Flugkörpers hinsichtlich eines voraussichtlichen Begegnungsorts erfolgt.

Gemäß Ausgestaltungen kann die Flugkörpersteuereinheit dazu eingerichtet sein, im Rahmen eines adaptiv aktiven, prädiktiven Lenkens zumindest einen der folgenden Schritte, insbesondere iterativ, auszuführen:
- Ermitteln des voraussichtlichen Begegnungsorts des Flugkörpers mit dem Zielobjekt und Ermitteln oder Einstellen eines Begegnungswinkels des Flugkörpers mit dem Zielobjekt derart, dass das Detektionsfeld eine direkte Sichtlinie auf das Zielobjekt umfasst;
- Ermitteln der Flugbahn und/oder der Orientierung des Flugkörpers, insbesondere der Ausrichtung bezüglich Roll-, Nick- und/oder Gierachse des Flugkörpers, derart, dass das Zielobjekt einen vorgegebenen Abstand zu den Grenzen des Detektionsfelds aufweist, vorzugsweise derart, dass das Zielobjekt etwa mittig des Detektionsfelds gelegen ist.

Dabei soll unter dem Begegnungswinkel insbesondere der zwischen einer Trajektorie des Zielobjekts und der Trajektorie des Flugkörpers gemessene Winkel verstanden werden. Gleichzeitig zu den beschriebenen Schritten können die Betriebsparameter zur Modulation adaptiv angepasst werden, insbesondere in solchen Flugphasen, in welchen eine derartige adaptive Anpassung zur Verbesserung der Zielerfassung verwendet werden kann.

An dieser Stelle sei explizit darauf hingewiesen, dass funktionelle und/oder strukturelle Merkmale von Ausgestaltungen der erfindungsgemäßen Flugkörpersteuerung und des Flugkörpers und verfahrensseitige Merkmale von Ausgestaltungen des erfindungsgemäßen Steuerungsverfahrens, sofern nicht bereits explizit beschrieben, dann zumindest jedoch basierend auf den Rückbezügen in den Patentansprüchen auch in der jeweils anderen Kategorie umgesetzt und beansprucht werden können.

Der im Rahmen der Beschreibung von erfindungsgemäßen Ausgestaltungen und Ausführungsformen sowie in den Ansprüchen verwendete Begriff "insbesondere" soll nicht einschränkend verstanden werden, sondern (lediglich) dahingehend, dass die durch "insbesondere" gekennzeichneten Merkmale, sofern nicht anderweitig angegeben, spezielle Ausgestaltungen oder Ausführungsformen betreffen.

Beispielhafte Ausgestaltungen und Ausführungsformen der Erfindung werden nachfolgend anhand der anhängenden Figuren beschrieben. Es zeigen:
- FIG. 1: beispielhaft einen zu einem Zielobjekt navigierten Lenkflugkörper;
- FIG. 2: schematisch eine Abfolge unterschiedlicher Modulationen in einer intermediären Flugphase; und
- FIG. 3: schematisch einen zur Durchführung des Verfahrens geeigneten Flugkörperradarsensor.

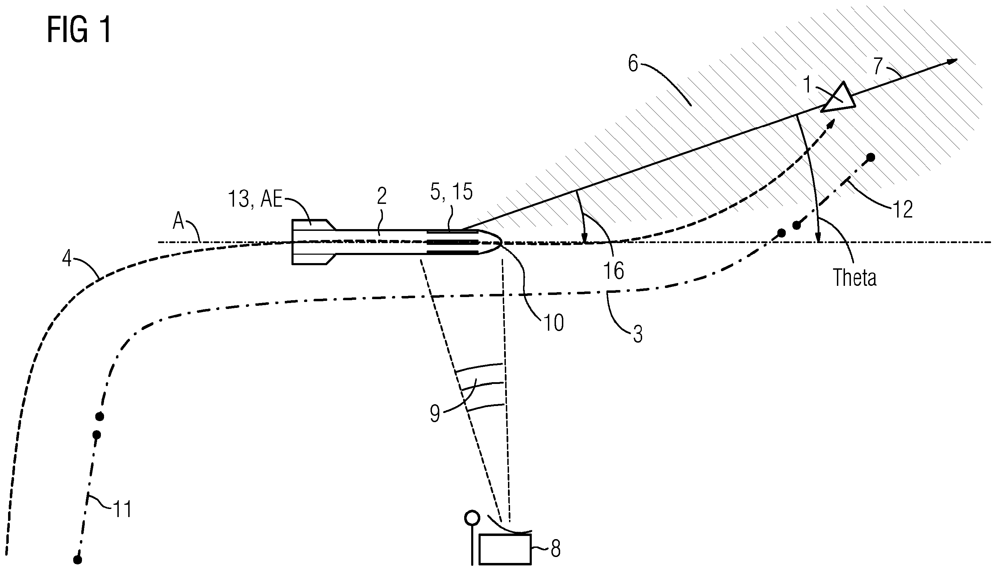

FIG. 1 zeigt beispielhaft einen zu einem boden-, luft- oder wassergebundenen, bewegbaren Zielobjekt 1 navigierten Lenkflugkörper 2, der sich in FIG. 1 in einer intermediären Flugphase 3 der Annäherung auf das Zielobjekt 1 längs einer Flugbahn 4 befindet.

Der Lenkflugkörper 2 umfasst eine Flugkörperradarsensoreinheit mit einem flugkörpereigenen Flugkörperradarsensor 5 und eine (nicht gezeigte) mit dem Flugkörperradarsensor signal- und steuerungstechnisch verbundene Steuer- und Datenverarbeitungseinheit zur Ver- und Bearbeitung der Sensordaten des Flugkörperradarsensors 5 und/oder weiterer Daten und Sensordaten, beispielsweise von flugkörpereigenen oder externen weiteren Sensoreinheiten.

Im Ausführungsbeispiel der FIG. 1 ist der Flugkörperradarsensor 5 als Seitensichtsensor ausgebildet, der ein Detektionsfeld 6 mit einer Mittenachse 7 aufweist, die mit der zur Flugkörperspitze 10 hinweisenden Richtung einen spitzen Polarwinkel Theta aufweist. Der Flugkörperradarsensor 5 ist eingerichtet zur Erfassung von Zielobjekten, insbesondere des Zielobjekts 1, während der Bewegung längs der Flugbahn 4.

Neben dem umfangsseitig vorgesehenen Flugkörperradarsensor 5 kann der Lenkflugkörper 2 ferner einen an der Flugkörperspitze 10 integrierten Zielerfassungssensor aufweisen, der dazu ausgebildet und eingerichtet ist, das Zielobjekt 1 bzw. Zielobjektdaten zu erfassen.

Der Flugkörperradarsensor 5 und eine mit diesem signal- und steuerungstechnisch verbundene Flugkörpersteuereinheit sind dazu eingerichtet, die Betriebsparameter zur Modulation des Flugkörperradarsensors 5 adaptiv in Abhängigkeit von Daten zum Zielobjekt 1, d.h. in Abhängigkeit von Zielobjektdaten, und Daten zum Flugkörper, d.h. Flugkörperdaten, anzupassen.

Zur adaptiven Anpassung der Betriebsparameter zur Modulation können mittels des Flugkörperradarsensors 5 und/oder mittels einer externen Sensoreinheit 8 ermittelte Daten zum Zielobjekt 1 und Lenkflugkörper 2 dahingehend ausgewertet werden, ob eine Änderung der Modulation des Flugkörperradarsensors eine verbesserte Zielerfassung ermöglicht.

Im Falle einer bestehenden Möglichkeit zur Verbesserung der Zielerfassung kann eine dem Flugkörperradarsensor 5 zugeordnete Steuereinheit, die Flugkörpersteuereinheit, die Betriebsparameter zur Modulation des Flugkörperradarsensors 5 adaptiv anpassen, beispielsweise hinsichtlich eines verbesserten Signal-zu-Rauschverhältnisses und/oder hinsichtlich einer verbesserten Falschalarmrate und/oder Entdeckungswahrscheinlichkeit.

Die adaptive Anpassung der Betriebsparameter zur Modulation erfolgt dabei vorzugsweise basierend auf den Sensordaten des Flugkörperradarsensors 5 und, bei Bedarf, unter Rückgriff auf zusätzliche die Sensordaten der externen Sensoreinheit 8 und/oder einer oder mehrerer weiterer flugkörpereigener Sensoreinheiten. Dabei kann die adaptive Anpassung der Betriebsparameter zur Modulation derart eingerichtet sein, dass, wie weiter oben bereits diskutiert, jeweils optimale SNR-Verhältnisse usw. erreicht werden.

Die adaptive Anpassung der Betriebsparameter zur Modulation erfolgt vorzugsweise in einem Zeitpunkt bzw. zu einem Zeitintervall während des Flugs des Flugkörpers 2, d.h. in einer Flugphase, in dem/der der Flugkörperradarsensor 5 und/oder etwaige weitere Sensoreinheiten in der Lage sind, das Zielobjekt 1 zu erfassen, wie in FIG. 1 schematisch dargestellt. In vorausgehenden Flugphasen, in denen noch keine Zielerfassung möglich ist, können die Betriebsparameter für den Flugkörperradarsensor 5, beispielsweise gemäß einer vorgegebenen Modulation basierend auf Daten zum Vorwissen, insbesondere a priori Wissen, zum Zielobjekt eingestellt werden, wobei die Daten zum Vorwissen beispielsweise von der externen Sensoreinheit 8 bereitgestellt und empfangen werden können.

Je nach Flugphase und Erfassungssituation können die Zielobjektdaten und/oder Flugobjektdaten auf Grundlage der Sensordaten des Flugkörperradarsensors 5 und/oder der weiteren Sensordaten aktualisiert werden, und die Anpassung der Betriebsparameter zur Modulation des Flugkörperradarsensors 5 kann in Abhängigkeit der aktualisierten Zielobjektdaten und Flugkörperdaten erfolgen. Mithin ist eine im Wesentlichen in Echtzeit erfolgende Anpassung der Betriebsparameter zur Modulation zur verbesserten Zielerfassung und/oder Zielnavigation möglich.

Zum Empfang der Daten von der externen Sensoreinheit 8 kann die Flugkörpersteuerung eine (nichtgezeigte) Empfangseinheit aufweisen, die zumindest eine unidirektionale Datenübermittlung 9 von Daten zum Lenkflugkörper 2 ermöglicht.

Daten zum Lenkflugkörper 2, d.h. die Flugkörperdaten, können auch aus Daten gewonnen werden, die im Zusammenhang mit einem zur Zielnavigation verwendeten Inertialnavigationsverfahren ermittelt werden. Ferner können Daten zum Zielobjekt, d.h. Zielobjektdaten, auf Grundlage von Sensordaten einer in der Flugkörperspitze 10 integrierten Sensoreinheit ermittelt werden.

Bei den Daten zum Lenkflugkörper 2 und Zielobjekt 1 kann es sich um statische oder dynamische Daten handeln.

Basierend auf den zum Zielobjekt 1 und/oder zum Lenkflugkörper 2 verfügbaren statischen und/oder dynamischen Daten kann die Modulation des Flugkörperradarsensors 5 angepasst werden.

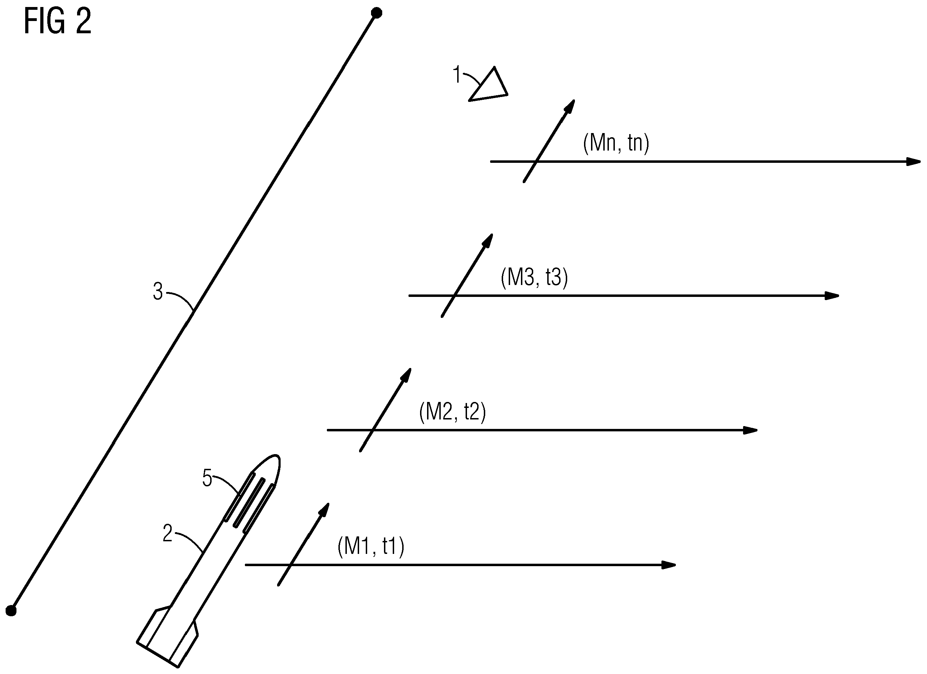

Schematisch ist dies beispielhaft in FIG. 2 gezeigt, die eine Abfolge unterschiedlicher Modulationen in der intermediären Flugphase zeigt. Während der intermediären Flugphase 3 erfolgt eine adaptive Anpassung der Betriebsparameter zur Modulation des Flugkörperradarsensors 5. Die adaptive Anpassung erfolgt dabei auf Grundlage von Zielobjektdaten wie beispielsweise Größe, Entfernung, Annäherungsgeschwindigkeit, Relativgeschwindigkeit usw. derart, dass insbesondere das SNR und die Detektionsleistung optimiert sind. Wird eine veränderte Gesamtsituation, insbesondere kinematische Gesamtsituation, ermittelt oder festgestellt, so ändert die zugehörige Steuereinheit entsprechend die Modulation des Flugkörperradarsensors 5, derart, dass eine, insbesondere hinsichtlich SNR und Detektionsleistung, optimale Zielerfassung möglich ist.

Im Beispiel der FIG. 2 sind mehrere Iterationen zur Anpassung der Betriebsparameter zur Einstellung der Modulation des Flugkörperradarsensors gezeigt. Nach Einstellung einer ersten Modulation M1 zum Zeitpunkt t1 in der intermediären Flugphase, werden eine zweite Modulation (M2, t2), und entsprechend iterativ eine dritte Modulation (M3, t3) und weitere Modulationen (Mn, tn) (wobei n eine natürliche Zahl ist) jeweils adaptiv in der beschriebenen Weise eingestellt.

Die initiale Einstellung der Modulation kann beispielsweise in der Abschussphase 11 des Flugkörpers von einer (nicht gezeigten) Abschusseinheit basierend auf Flugkörperdaten und/oder Zielobjektdaten eingestellt werden die von der externen Sensoreinheit 8 erfasst und bereitgestellt wurden

In der finalen Flugphase 12 (in FIG. 1) kann, sofern beispielsweise ein geeignetes SNR und eine ausreichende Detektionsleistung sichergestellt werden können, die Modulation des Flugkörperradarsensors 5 statistisch angepasst werden, wodurch beispielswiese in der finalen Flugphase 12 der Rechenaufwand zur Zielerfassung, Zielführung und Zielnavigation verringert werden kann.

Zur adaptiven Anpassung der Betriebsparameter zur Modulation des Flugkörperradarsensors 5 werden beispielsweise Zielobjektdaten wie Geschwindigkeit, Position, Bewegungsrichtung des Zielobjekts und korrespondierende Daten des Flugkörpers verwendet werden.

Der Lenkflugkörper 2 nach FIG. 1 weist einen Antrieb 13 auf, der ein antriebsseitiges Ende AE des Lenkflugkörpers 2 definiert. An dem davon in Richtung der Längsachse A abgewandten Ende weist der Lenkflugkörper 2 einen Flugkörperkopf auf, der in der Flugkörperspitze 10 integriert ist. Am antriebsseitigen Ende AE weist der Lenkflugkörper 2 mehrere nicht näher bezeichnete Flossen zur Lenkung bzw. zur Flugstabilisierung auf.

In Richtung des antriebsseitigen Endes AE weist der Lenkflugkörper 2 ein sich an die Flugkörperspitze 10 anschließendes Lenkteil 15 auf. Die Flugkörperspitze 10 kann mit einer weiteren Sensoreinheit zur Zielerfassung, oder anderweitig funktionalisiert sein, beispielsweise mit einem Gefechtskopf.

Das Lenkteil 15 umfasst eine oder mehrere (nicht gezeigte) Flugkörpersteuereinheiten zur Lenkung des Lenkflugkörpers 2. Der Flugkörperradarsensor 5 ist im Beispiel der FIG. 1 an einer längsseitigen Umfangsfläche des Lenkflugkörperkorpus montiert oder integriert, was den Vorteil von kurzen Signalwegen zwischen den Sensoreinheiten, beispielsweise zwischen Radarantennen, des Flugkörperradarsensors 5 und der zugeordneten Flugkörpersteuereinheit und den Steuereinheiten des Lenkteils 15 bietet. Ferner bietet der Umfangsseitig montierte oder integrierte Flugkörperradarsensor 5 auch aerodynamische Vorteile gegenüber anderweitiger Montage am Flugkörperkorpus.

Wie bereits erwähnt, weist der Flugkörperradarsensor 5 ein zur Längsachse A nicht konzentrisches Detektionsfeld 6 auf.

Das Detektionsfeld 6 kann durch ein flugkörperfestes rechtshändiges Kugelkoordinatensystem beschrieben werden, dessen Ursprung an einer Sensorfläche eines Sensors des Flugkörperradarsensors 5 liegt. Dieses Kugelkoordinatensystem weist eine parallel zur Längsachse A verlaufende Polachse auf, wobei die Richtung der positiven Polachse durch die vom antriebsseitigen Ende AE zur Flugkörperspitze 10 verlaufende Richtung definiert ist. Ein in positiver Richtung der Polachse verlaufender Vektor wird nachfolgend und hierin auch als Polachsenvektor bezeichnet.

Das Detektionsfeld 6 ist im gezeigten Beispiel im Wesentlichen konzentrisch zur Mittenachse 7, wobei der vom Koordinatenursprung ausgehende, vom Lenkflugkörper 2 wegweisende und durch die Mittenachse 7 verlaufende Vektor nachfolgend als Mittenachsenvektor bezeichnet wird.

Der zwischen dem Polachsenvektor und dem Mittenachsenvektor definierte Mittenachsen-Polarwinkel 16 ist im gezeigten Beispiel ein spitzer, von Null verschiedener positiver Winkel.

Im Koordinatensystem des Seitensichtsensors 2 kann die Position des Zielobjekts 10 durch einen Abstand zum Koordinatenursprung, einen Polarwinkel Theta und einen Azimutwinkel Phi beschrieben werden.

Mittels des Flugkörperradarsensors 5 können nach Erfassung des Zielobjekts 1 der Abstand, der Polarwinkel Theta und der Azimutwinkel Phi, sowie andere Parameter wie beispielsweise Lage, Position, Orientierung und/oder Geschwindigkeit des Zielobjekts 1 basierend auf Radarsignalen des Flugkörperradarsensors 5 ermittelt werden. Analoges gilt für andere Sensorarten wie Infrarot-Sensoren und optische Sensoren, die beispielsweise in der Flugkörperspitze 10 integriert sein können.

Vor und/oder auch nach Start des Lenkflugkörpers 2 können durch die externe Sensoreinheit 8 ermittelte Zielobjektdaten an den Lenkflugkörper 2, insbesondere zur Aktualisierung der dem Lenkflugkörper 2 vorliegenden Zielobjektdaten übertragen werden, wodurch insbesondere die Genauigkeit der Zielerfassung und die Zielführung verbessert werden können.

Sollte die Ausrichtung des Lenkflugkörpers 2 in einer Flugphase nicht dazu geeignet sein, das Zielobjekt 1 im Detektionsfeld 6 zu erfassen, kann der Lenkflugkörper 2 entsprechend navigiert und ausgerichtet werden, z.B. durch geeignete Einstellung des Nick-, Gier-, und Rollwinkels derart, dass das Zielobjekt 1 im Detektionsfeld 6 zu liegen kommt. Ferner können die Betriebsparameter zur Modulation des Flugkörperradarsensors 5 basierend auf den Zielobjektdaten und Flugkörperdaten in geeigneter Weise adaptiv angepasst werden, so dass vorteilhafte Detektionsbedingungen vorliegen.

Nachdem der Lenkflugkörper 2 derart orientiert und ausgerichtet ist, dass das Zielobjekt 1 im Detektionsfeld 6 gelegen ist und detektiert werden kann, kann die Zielführung auf das Zielobjekt 1 hin, zumindest teilweise, unter Verwendung der Sensordaten des Flugkörperradarsensors 5 erfolgen. Hierzu kann die Flugkörpersteuerung entsprechend eingerichtet sein, das Zielobjekt 1 basierend auf den Sensordaten des Flugkörperradarsensors 5 zu verfolgen und den Lenkflugkörper 2 auf das Zielobjekt 1 hin prädiktiv zu lenken, gestützt auf einen voraussichtlichen Begegnungsort zwischen Lenkflugkörper 2 und Zielobjekt 1.

Basierend auf dem voraussichtlichen Begegnungsort und die jeweils vorliegende kinematische Bewegungs- und Begegnungssituation kann die Flugkörpersteuerung die Orientierung des Lenkflugkörpers 2 und die Betriebsparameter zur Modulation derart adaptiv einstellen, dass eine optimale Zielerfassung mittels des Flugkörperradarsensors 5 möglich ist.

In der auf die intermediäre Flugphase 3 folgenden finalen Flugphase 12 können die Betriebsparameter zur Modulation des Flugkörperradarsensors 5 statistisch angepasst werden, sofern dies hinsichtlich einer ausreichenden Zielerfassung möglich ist, insbesondere falls ein ausreichender Zielkontrast über feste Zielverweilzeiten erreicht werden kann. Bei Bedarf ist es auch möglich, dass in der finalen Flugphase 12 eine adaptive Anpassung der Betriebsparameter zur Modulation des Flugkörperradarsensors 5 erfolgt.

Es zeigt sich, dass mit der beschriebenen Flugkörpersteuerung bzw. einem korrespondierenden Verfahren eine effiziente Zielerfassung und Zielführung des Lenkflugkörpers 2 erreicht werden kann.

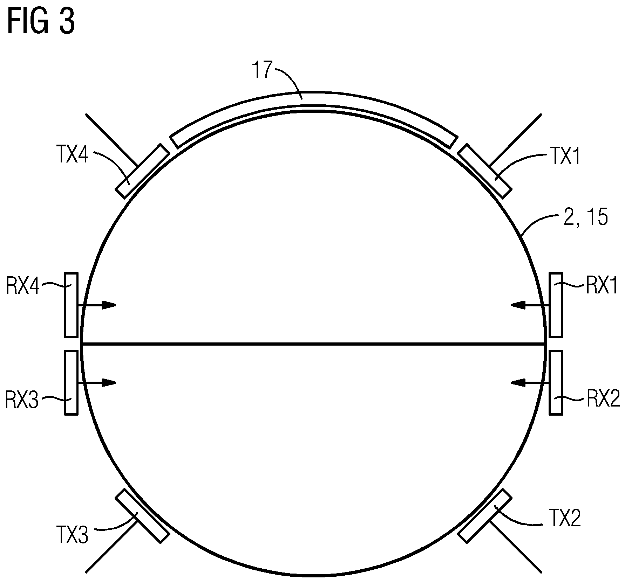

FIG. 3 zeigt schematisch einen zur Durchführung des Steuerungsverfahrens geeigneten Flugkörperradarsensor 5 im Querschnitt. Wie aus FIG. 3 ersichtlich ist, weist der Flugkörperradarsensor 5 im Bereich des Lenkteils 15 an dessen Umfang angeordnete Radarantennen auf. Konkret weist der Flugkörperradarsensor 5 vier Sendeantennen TX1 bis TX4 und zwei Paare zu je zwei Empfangsantennen RX1, RX3 und RX2, RX4 auf.

Die Radarantennen TX, RX sind am Umfang des Lenkteils 15 verteilt angeordnet, wobei die einzelnen Antennen beispielsweise als Oberflächenwellenantennen oder als substratintegrierte Leckwellenantennen ausgebildet sein können.

Über die adaptive Anpassung der Modulation der Sendeantennen TX und/oder der Empfangsantennen RX kann der Flugkörperradarsensor 5 an die jeweilige Begegnungs- und Bewegungssituation angepasst und zur Zielerfassung optimal eingestellt werden.

Mit den gezeigten vier Sendeantennen TX und Empfangsantennen RX und geeigneten Modulationen kann der vordere Halbraum des Lenkflugkörpers 2 vergleichsweise gut ausgeleuchtet werden, wobei die Betriebsparameter zur Modulation des Flugkörperradarsensors 5 insbesondere derart adaptiv angepasst werden können, dass die Mittenachse 7 optimal in Richtung des Zielobjekts 1 ausgerichtet ist, und eine optimale Erfassung des Zielobjekts 1 möglich ist.

Mit den Empfangsantennen RX, die an gegenüberliegenden Seiten des Flugkörperkorpus angeordnet sind, können reflektierte Radarsignale aus zwei gegenüberliegenden Raumsegmenten empfangen und erfasst werden.

In FIG. 3 ist des Weiteren noch ein optionaler GNSS-Sensor 17 gezeigt, mit dem der Lenkflugkörper Positionsdaten ermitteln kann, die als Flugkörperdaten zur adaptiven Anpassung der Betriebsparameter zur Modulation verwendet werden können.

Das hierin vorgeschlagene Steuerungsverfahren ermöglicht insbesondere eine optimierte Zielerfassung und Zielführung, wobei auf Grund der am Umfang des Flugkörperkorpus integrierten Bauweise des Flugkörperradarsensors alternative Funktionalisierungen für die Flugkörperspitze in Frage kommen.

### Bezugszeichen

- 1: Zielobjekt
- 2: Lenkflugkörper
- 3: intermediäre Flugphase
- 4: Flugbahn
- 5: Flugkörperradarsensor
- 6: Detektionsfeld
- 7: Mittenachse
- 8: externe Sensoreinheit
- 9: Datenübermittlung
- 10: Flugkörperspitze
- 11: Abschussphase
- 12: finale Flugphase
- 13: Antrieb
- 14: Lenkflugkörperkopf
- 15: Lenkteil
- 16: Polarwinkel
- 17: GNSS-Sensor

- A: Längsachse
- AE: antriebsseitiges Ende
- M: Modulation
- n: natürliche Zahl;
- t: Zeit
- Theta: Polarwinkel
- TX: Sendeantenne
- RX: Empfangsantenne

## Patentansprüche

1. Steuerungsverfahren für zumindest einen, mit einem Flugkörper (2) längs einer Flugbahn (4) bewegten Flugkörperradarsensor (5), wobei
a) der Flugkörperradarsensor (5) eingerichtet ist zur Erfassung eines Zielobjekts (1), ein Detektionsfeld (6) aufweist, dessen Mittenachse (7) schräg zur Längsachse (A) des Flugkörpers (2) zum vorderen Halbraum des Flugkörpers (2) hin ausgerichtet ist, und an einem Umfang des Flugkörperkorpus integriert oder montiert ist,
b) die Betriebsparameter zur Modulation (M) des Flugkörperradarsensors (5) während der Bewegung längs der Flugbahn (4) zur Anpassung der Zielerfassung und -verfolgung an die jeweils bestehende kinematische Gesamt-Bewegungssituation und -Begegnungssituation in Abhängigkeit von Zielobjektdaten über das Zielobjekt (1) und in Abhängigkeit von Flugkörperdaten adaptiv angepasst werden,
c) die Betriebsparameter Sendebetriebsparameter einer Sendeeinheit des Flugkörperradarsensors (5) zum Senden von Radarsignalen und Empfangsbetriebsparameter einer Empfangseinheit des Flugkörperradarsensors (5) zur Erfassung vom Zielobjekt (1) reflektierter Radarsignale umfassen,
d) die Zielobjektdaten Daten zur Position des Zielobjekts (1), zur Größe des Zielobjekts (1), zur Beschaffenheit des Zielobjekts (1), zur Annäherungsgeschwindigkeit, zur Geschwindigkeit des Zielobjekts (1), zur Entfernung des Zielobjekts (1) vom Flugkörper (2), zur Beschleunigung des Zielobjekts (1) und/oder zur Orientierung des Zielobjekts (1) umfassen, und
e) die Flugkörperdaten ausgewählt sind aus der Gruppe umfassend: Position des Flugkörpers (2), Geschwindigkeit des Flugkörpers (2), Beschleunigung des Flugkörpers (2), Annäherungsgeschwindigkeit des Flugkörpers (2) auf das Zielobjekt (1), Flugrichtung des Flugkörpers (2), Art des Flugkörperradarsensors (5), Position des Flugkörperradarsensors (5) relativ zum Flugkörperkorpus, Energievorrat des Flugkörpers (2) zum Betrieb des Flugkörperradarsensors (5), Flugphase (3, 11, 12) des Flugkörpers (2).

2. Steuerungsverfahren nach Anspruch 1, wobei der Flugkörperradarsensor (5) ein Dauerstrichradarsensor oder ein Impulsradarsensor ist.

3. Steuerungsverfahren nach Anspruch 1 oder 2, wobei basierend auf den Flugkörperdaten und/oder den Zielobjektdaten des Weiteren der Rollwinkel, der Gierwinkel und/oder der Nickwinkel des Flugkörpers (2) gesteuert wird/werden.

4. Steuerungsverfahren nach einem der Ansprüche 1 bis 3, wobei im Rahmen der adaptiven Anpassung der Betriebsparameter zur Modulation (M) zumindest einer der folgenden Betriebsparameter adaptiv angepasst wird: Pulsrate, Intensität, Frequenz, Rampensteigung, Rampenlänge, Rampenhöhe.

5. Steuerungsverfahren nach einem der Ansprüche 1 bis 4, wobei die Flugkörperdaten und/oder die Zielobjektdaten basierend auf vom Flugkörper (2) empfangenen Sensordaten zumindest einer externen Sensoreinheit (8), basierend auf Daten des Flugkörperradarsensors (5) und/oder basierend auf Sensordaten zumindest einer vom Flugkörperradarsensor verschiedenen weiteren flugkörpereigenen Sensoreinheit zur Erfassung von Zielobjektdaten ermittelt und/oder aktualisiert werden.

6. Steuerungsverfahren nach einem der Ansprüche 1 bis 5, wobei die Zielobjektdaten zumindest teilweise über eine Drahtlosverbindung (9) während des Flugs (4) des Flugkörpers (2) und/oder vor Start des Flugkörpers (2) über eine drahtlose Datenverbindung (9) oder eine drahtgebundene Datenverbindung vom Flugkörper (2) empfangen werden.

7. Steuerungsverfahren nach einem der Ansprüche 1 bis 6, wobei die adaptive Anpassung der Betriebsparameter zur Modulation (M) des Flugkörperradarsensors (5) des Weiteren in Abhängigkeit eines jeweils vorliegenden Signal-zu-Rauschverhältnisses, in Abhängigkeit einer jeweils geforderten Detektionsleistung, in Abhängigkeit des Antennengewinns und/oder in Abhängigkeit der Sendeleistung in Richtung des Zielobjekts (1) erfolgt.

8. Steuerungsverfahren nach einem der Ansprüche 1 bis 7, wobei in einer initialen Flugphase (11) ein zeitkontinuierliches Signal einer bestimmten Chirp-Dauer eingestellt und abgestrahlt wird, und wobei in einer darauffolgenden Flugphase (3) nach Erkennung des Zielobjekts (1) im Auswertefenster des Flugkörperradarsensors (5) die Betriebsparameter zur Modulation (M) des Flugkörperradarsensors (5, 15, TX, RX) adaptiv angepasst werden.

9. Flugkörpersteuereinheit (15), für zumindest einen, mit einem Flugkörper (2) längs einer Flugbahn (4) bewegten Flugkörperradarsensor (5), umfassend eine festprogrammierte Steuereinheit und/oder eine flüchtig programmierbare Steuereinheit mit einem zugeordneten nichtflüchtigen Speicher, wobei die festprogrammierte Steuereinheit und/oder der nichtflüchtige Speicher Instruktionen umfassen, die bei Ausführung durch die festprogrammierte Steuereinheit bzw. die flüchtig programmierbare Steuereinheit die Ausführung eines Steuerungsverfahrens nach einem der Ansprüche 1 bis 8 bewirken.

10. Flugkörper (2), umfassend
- eine Flugkörpersteuereinheit (15) nach Anspruch 9 und
- zumindest einen flugkörpereigenen Flugkörperradarsensor (5) mit einem Detektionsfeld (6), dessen Mittenachse (7) schräg zur Längsachse (A) des Flugkörpers (2) zum vorderen Halbraum des Flugkörpers (2) hin ausgerichtet ist und der an einem Umfang des Flugkörperkorpus integriert oder montiert ist, wobei die Flugkörpersteuereinheit (15) mit dem flugkörpereigenen Flugkörperradarsensor (5) zu dessen Ansteuerung gemäß einem Steuerungsverfahren nach einem der Ansprüche 1 bis 8 signaltechnisch und steuerungstechnisch gekoppelt ist.

11. Flugkörper (2) nach Anspruch 10, umfassend des Weiteren zumindest eine vom Flugkörperradarsensor (5) verschiedene, flugkörpereigene weitere Sensoreinheit zur Erfassung von Zielobjektdaten, die mit der Flugkörpersteuereinheit (15) zur Durchführung eines Steuerungsverfahrens nach einem der Ansprüche 1 bis 8 signaltechnisch und steuerungstechnisch gekoppelt ist, wobei die weitere flugkörpereigene Sensoreinheit ausgewählt ist aus der Gruppe umfassend: Radarsensoreinheit, optische Sensoreinheit, Infrarot-Sensoreinheit.

## Claims

1. Control method for at least one missile radar sensor (5) moved with a missile (2) along a trajectory (4), wherein
a) the missile radar sensor (5) is set up to recognize a target object (1), has a detection field (6), the centre axis (7) of which is oriented obliquely to the longitudinal axis (A) of the missile (2) to the front half-space of the missile (2), and is integrated or mounted on a periphery of the missile body,
b) the operating parameters for modulation (M) of the missile radar sensor (5) are adaptively adjusted during the movement along the trajectory (4) depending on target object data on the target object (1) and depending on missile data for adjusting the target acquisition and tracking to the overall kinematic movement situation and encounter situation occurring in each case,
c) the operating parameters include transmitting mode parameters of a transmitting unit of the missile radar sensor (5) for transmitting radar signals and receive mode parameters of a receiving unit of the missile radar sensor (5) for recognizing radar signals reflected by the target object (1),
d) the target object data include data on the position of the target object (1), the size of the target object (1), the nature of the target object (1), the approach speed, the speed of the target object (1), the distance of the target object (1) from the missile (2), the acceleration of the target object (1) and/or the orientation of the target object (1), and
e) the missile data are selected from the group comprising: position of the missile (2), speed of the missile (2), acceleration of the missile (2), approach speed of the missile (2) to the target object (1), direction of flight of the missile (2), type of missile radar sensor (5), position of the missile radar sensor (5) relative to the missile body, energy store of the missile (2) for operating the missile radar sensor (5), flight phase (3, 11, 12) of the missile (2).

2. Control method according to Claim 1, wherein the missile radar sensor (5) is a continuous wave sensor or a pulse radar sensor.

3. Control method according to Claim 1 or 2, wherein, based on the missile data and/or the target object data, the roll angle, the yaw angle and/or the pitch angle of the missile (2) is/are furthermore controlled.

4. Control method according to one of Claims 1 to 3, wherein within the framework of the adaptive adjustment of the operating parameters for modulation (M) at least one of the following operating parameters is adaptively adjusted: pulse rate, intensity, frequency, ramp gradient, ramp length, ramp height.

5. Control method according to one of Claims 1 to 4, wherein the missile data and/or the target object data based on sensor data from at least one external sensor unit (8) received by the missile (2), based on data from the missile radar sensor (5) and/or based on sensor data from at least one other on-board missile sensor unit, other than the missile radar sensor, for collecting target object data, are determined and/or updated.

6. Control method according to one of Claims 1 to 5, wherein the target object data are received by the missile (2) at least in part via a wireless connection (9) during the flight (4) of the missile (2) and/or before the missile (2) is launched via a wireless data connection (9) or a wired data connection.

7. Control method according to one of Claims 1 to 6, wherein the adaptive adjustment of the operating parameters for modulation (M) of the missile radar sensor (5) furthermore takes place depending on a signal-to-noise ratio present in each case, depending on a detection performance required in each case, depending on the antenna gain and/or depending on the transmitting performance in the direction of the target object (1).

8. Control method according to one of Claims 1 to 7, wherein a time-continuous signal with a given chirp duration is set and emitted in an initial flight phase (11), and wherein in a subsequent flight phase (3) following identification of the target object (1) in the evaluation window of the missile radar sensor (5) the operating parameters for modulation (M) of the missile radar sensor (5, 15, TX, RX) are adaptively adjusted.

9. Missile control unit (15) for at least one missile radar sensor (5) moved with a missile (2) along a trajectory (4), comprising a fixed-programmed control unit and/or a control unit that can have volatile programming with non-volatile storage assigned, wherein the fixed-programmed control unit and/or the non-volatile storage include instructions which, when executed by the fixed-programmed control unit or the control unit that can have volatile programming, produce a control method according to one of Claims 1 to 8.

10. Missile (2) comprising
- a missile control unit (15) according to Claim 9 and
- at least one on-board missile radar sensor (5) having a detection field (6), the centre axis (7) of which is oriented obliquely to the longitudinal axis (A) of the missile (2) to the front half-space of the missile (2) and which is integrated or mounted on a periphery of the missile body, wherein the missile control unit (15) is coupled in terms of signals and controls with the on-board missile radar sensor (5) for the actuation thereof in accordance with a control method according to one of Claims 1 to 8.

11. Missile (2) according to Claim 10, furthermore comprising at least one other on-board sensor unit for recognizing target object data which differs from the missile radar sensor (5) and which is coupled in terms of signals and controls with the missile control unit (15) for implementing a control method according to one of Claims 1 to 8, wherein the other on-board sensor unit is selected from the group comprising: radar sensor unit, optical sensor unit, infrared sensor unit.

## Revendications

1. Procédé de commande pour au moins un capteur radar de missile (5) se déplaçant avec un missile (2) le long d'une trajectoire de vol (4), dans lequel :
a) le capteur radar de missile (5) est conçu pour la détection d'un objet cible (1), présente un champ de détection (6) dont l'axe central (7) est orienté de manière oblique par rapport à l'axe longitudinal (A) du missile (2) vers le demi-espace avant du missile (2), et est intégré ou monté sur une circonférence du corps de missile,
b) les paramètres de fonctionnement pour la modulation (M) du capteur radar de missile (5) pendant le déplacement le long de la trajectoire de vol (4) sont ajustés de manière adaptative en fonction de données d'objet cible concernant l'objet cible (1) et en fonction de données de missile, pour ajuster la détection et la poursuite de la cible à la situation cinématique globale de déplacement et de rencontre existante respective,
c) les paramètres de fonctionnement comprennent des paramètres de fonctionnement d'émission d'une unité d'émission du capteur radar de missile (5) pour l'émission de signaux radar et des paramètres de fonctionnement de réception d'une unité de réception du capteur radar de missile (5) pour la détection des signaux radar réfléchis par l'objet cible (1),
d) les données d'objet cible comprennent des données concernant la position de l'objet cible (1), la taille de l'objet cible (1), la nature de l'objet cible (1), la vitesse d'approche, la vitesse de l'objet cible (1), la distance de l'objet cible (1) par rapport au missile (2), l'accélération de l'objet cible (1) et/ou l'orientation de l'objet cible (1), et
e) les données de missile sont sélectionnées dans le groupe comprenant : la position du missile (2), la vitesse du missile (2), l'accélération du missile (2), la vitesse d'approche du missile (2) vers l'objet cible (1), la direction de vol du missile (2), le type de capteur radar de missile (5), la position du capteur radar de missile (5) par rapport au corps de missile, la réserve d'énergie du missile (2) pour le fonctionnement du capteur radar de missile (5), la phase de vol (3, 11, 12) du missile (2).

2. Procédé de commande selon la revendication 1, dans lequel le capteur radar de missile (5) est un capteur radar à ondes continues ou un capteur radar à impulsions.

3. Procédé de commande selon la revendication 1 ou 2, dans lequel l'angle de roulis, l'angle de lacet et/ou l'angle de tangage du missile (2) sont en outre commandés sur la base des données de missile et/ou des données d'objet cible.

4. Procédé de commande selon l'une des revendications 1 à 3, dans lequel au moins l'un des paramètres de fonctionnement suivants est ajusté de manière adaptative dans le cadre de l'ajustement adaptatif des paramètres de fonctionnement pour la modulation (M) : fréquence de répétition des impulsions, intensité, fréquence, pente de rampe, longueur de rampe, hauteur de rampe.

5. Procédé de commande selon l'une des revendications 1 à 4, dans lequel les données de missile et/ou les données d'objet cible sont déterminées et/ou mises à jour sur la base de données de capteur reçues par le missile (2) d'au moins une unité de capteur externe (8), sur la base de données du capteur radar de missile (5) et/ou sur la base de données de capteur d'au moins une autre unité de capteur propre au missile, différente du capteur radar de missile, pour la détection de données d'objet cible.

6. Procédé de commande selon l'une des revendications 1 à 5, dans lequel les données d'objet cible sont reçues, au moins partiellement, par le missile (2) par l'intermédiaire d'une liaison sans fil (9) pendant le vol (4) du missile (2) et/ou avant le lancement du missile (2) par l'intermédiaire d'une liaison de données sans fil (9) ou d'une liaison de données filaire.

7. Procédé de commande selon l'une des revendications 1 à 6, dans lequel l'ajustement adaptatif des paramètres de fonctionnement pour la modulation (M) du capteur radar de missile (5) s'effectue en outre en fonction d'un rapport signal/bruit existant respectif, en fonction de performances de détection requises respectives, en fonction du gain de l'antenne et/ou en fonction de la puissance d'émission en direction de l'objet cible (1).

8. Procédé de commande selon l'une des revendications 1 à 7, dans lequel un signal continu dans le temps ayant une durée de chirp déterminée est ajusté et rayonné lors d'une phase de vol initiale (11), et dans lequel, lors d'une phase de vol ultérieure (3), après la détection de l'objet cible (1) dans la fenêtre d'évaluation du capteur radar de missile (5), les paramètres de fonctionnement pour la modulation (M) du capteur radar de missile (5, 15, TX, RX) sont ajustés de manière adaptative.

9. Unité de commande de missile (15), pour au moins un capteur radar de missile (5) se déplaçant avec un missile (2) le long d'une trajectoire de vol (4), comprenant une unité de commande à programme fixe et/ou une unité de commande à programme volatile à laquelle est associée une mémoire non volatile, l'unité de commande à programme fixe et/ou la mémoire non volatile comprenant des instructions qui, lors de leur exécution par l'unité de commande à programme fixe ou l'unité de commande à programme volatile, provoquent la mise en œuvre d'un procédé de commande selon l'une quelconque des revendications 1 à 8.

10. Missile (2), comprenant :
- une unité de commande de missile (15) selon la revendication 9, et
- au moins un capteur radar de missile (5) propre au missile comprenant un champ de détection (6), dont l'axe central (7) est orienté de manière oblique par rapport à l'axe longitudinal (A) du missile (2) vers le demi-espace avant du missile (2) et qui est intégré ou monté sur une circonférence du corps de missile, l'unité de commande de missile (15) étant couplée par des techniques d'échange de signaux et de commande au capteur radar de missile (5) propre au missile afin qu'il soit commandé conformément à un procédé de commande selon l'une des revendications 1 à 8.

11. Missile (2) selon la revendication 10, comprenant en outre au moins une autre unité de capteur propre au missile, différente du capteur radar de missile (5), pour la détection de données d'objet cible, qui est couplée par des techniques d'échange de signaux et de commande à l'unité de commande de missile (15) afin de mettre en œuvre un procédé de commande selon l'une quelconque des revendications 1 à 8, l'autre unité de capteur propre au missile étant sélectionnée dans le groupe comprenant : une unité de capteur radar, une unité de capteur optique, une unité de capteur infrarouge.
